Europäisches Patentamt

European Patent Office

Office européen des brevets

(11) Numéro de publication: **0 492 690 B1**

(12) **FASCICULE DE BREVET EUROPEEN**

(45) Date de publication du fascicule du brevet: **04.10.95** (51) Int. Cl.6: **C02F 3/10**, B01D 63/10

(21) Numéro de dépôt: **91203201.8**

(22) Date de dépôt: **09.12.91**

(54) **Procédé et réacteur de traitement d'eau utilisant un lit granulaire adapté pour assurer une filtration ou une filtration associée à une épuration biologique de l'eau.**

(30) Priorité: **21.12.90 FR 9016588**

(43) Date de publication de la demande:
**01.07.92 Bulletin 92/27**

(45) Mention de la délivrance du brevet:
**04.10.95 Bulletin 95/40**

(84) Etats contractants désignés:
**AT BE CH DE DK ES FR GB GR IT LI LU MC NL SE**

(56) Documents cités:
**EP-A- 0 025 309**
**EP-A- 0 152 711**
**DE-A- 3 631 817**

(73) Titulaire: **INSTITUT NATIONAL DES SCIENCES APPLIOUEES DE TOULOUSE**
**Avenue de Rangueil**
**F-31400 Toulouse (FR)**

(72) Inventeur: **Capdeville, Bernard**
**61, rue Bonnat**
**F-31400 Toulouse (FR)**

(74) Mandataire: **Barre, Philippe**
**Cabinet Barre Laforgue et associés**
**95 rue des Amidonniers**
**F-31000 Toulouse (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

EP 0 492 690 B1

**Description**

L'invention concerne un procédé et un réacteur de traitement d'eau utilisant un lit granulaire adapté pour assurer une filtration ou une filtration associée à une épuration biologique de l'eau.

Il existe diverses techniques de traitement d'eau utilisant un lit granulaire adapté pour assurer soit une filtration conventionnelle d'une eau, soit une filtration associée à une épuration biologique d'une eau usée. Du fait qu'il se produit, dans le temps, un remplissage du volume inter-granulaire et donc un colmatage du lit, chacune de ces techniques consiste à alterner des cycles de traitement d'eau au moyen du lit granulaire, et des cycles de lavage de ce lit.

Un premier procédé a ainsi consisté, lors de chaque cycle de traitement, à faire ruisseler l'eau à traiter à travers un lit granulaire totalement émergé. Ce procédé comporte toutefois un inconvénient majeur résultant du fait que le temps de résidence de l'eau à traiter est relativement court, ce qui conduit à une efficacité médiocre vis-a-vis de l'élimination des pollutions solubles et particulaires. D'autre part, le décrochage du film biologique altère la qualité de l'effluent traité de par la présence de matières en suspension.

Pour pallier cet inconvénient, d'autres procédés, tels que décrits dans le brevet EP 377 356 ont consisté, lors de chaque cycle de traitement, à utiliser un lit granulaire partiellement ou totalement immergé, constitué de matériaux supports granulaires de masse volumique supérieure à celle de l'eau à traiter. Ces procédés permettent, en effet, grâce à une augmentation du temps de résidence de l'eau à traiter, de réaliser une épuration biologique beaucoup plus efficace que lorsque le lit est totalement émergé. Dans ces conditions, la rétention des matières en suspension est favorisée mais elle provoque un colmatage du lit granulaire qu'il convient de contrôler.

Le cycle de lavage des procédés décrits ci-dessus nécessite, quant à lui, de détasser le lit granulaire au moyen d'un mélange air/eau en vue d'obtenir une fluidisation de ce lit généralement réalisée au moyen d'air, en vue d'économiser l'eau, cette dernière étant ensuite utilisée pour l'entraînement et la récupération des boues. Le lavage consiste donc à détasser le lit granulaire au moyen d'air, puis à évacuer les boues au moyen d'un flux continu d'eau. L'inconvénient d'un tel procédé de lavage réside dans le fait qu'il nécessite une consommation d'eau relativement importante qui, dans la pratique, s'avère correspondre à un volume d'eau égal à plusieurs fois le volume du réacteur, pouvant représenter jusqu'à 10 % du volume d'eau traitée.

Une autre technique de traitement a, quant à elle, consisté à effectuer une filtration et une épuration biologique au moyen d'un lit granulaire flottant immergé, bloqué à sa partie supérieure par une grille, et constitué de matériaux supports de masse volumique très inférieure à celle de l'eau, à travers lequel l'eau est amenée à circuler selon un courant ascendant ou descendant. Selon ce procédé, le lavage du lit granulaire est réalisé selon le principe d'une chasse hydraulique qui permet une importante économie d'eau par rapport aux procédés ci-dessus décrits, tout en favorisant une expansion des matériaux supports. Toutefois, un tel lavage s'avère souvent inapte à créer un décrochage suffisant des boues par rapport aux matériaux supports, notamment lors du traitement d'eaux usées par culture fixée, ce qui conduit fréquemment à une diminution globale de l'efficacité du réacteur.

Par ailleurs, il existe également un procédé, décrit dans la demande de brevet internationale WO 91/08817 non publiée à la date de priorité de la présente demande, mettant en oeuvre un lit granulaire constitué d'un matériau de densité inférieure à celle de l'eau reposant sur un plancher inférieur mobile permettant de contrôler la flottabilité du matériau de façon à éviter la désolidarisation du lit granulaire en cours de traitement.

Un tel procédé, attractif au premier abord, présente l'inconvénient majeur de nécessiter un contrôle et un ajustement en continu de la flottabilité du matériau, imposant l'utilisation d'un appareillage complexe dont le coût d'exploitation, à l'échelle industrielle, s'avère prohibitif. De plus, compte tenu de la fluctuation des débits d'eau et de la nature de la pollution à traiter, ce procédé s'avère pratiquement inexploitable en raison des contraintes de régulation qu'il impose.

La présente invention vise à pallier les inconvénients précités des procédés connus et a pour principal objectif de fournir un procédé de traitement d'eau dont les opérations de lavage du lit granulaire sont optimisées, c'est-à-dire nécessitent un volume d'eau de lavage très faible, et conduisent à un décolmatage efficace dudit lit granulaire, suivi d'une séparation totale par gravité des boues de la liqueur mixte et des matériaux supports permettant ainsi une évacuation totale de ces boues par simple vidange.

Un autre objectif est de fournir un procédé permettant d'optimiser la rétention des matières en suspension et l'oxydation de la pollution soluble.

A cet effet, l'invention vise un procédé de traitement d'eau du type utilisant un lit granulaire disposé dans un réacteur au-dessus d'un plancher, ce lit granulaire étant adapté pour assurer une filtration ou une

2

filtration associée à une épuration biologique de l'eau, ledit procédé consistant à alterner des cycles de traitement d'eau au moyen dudit lit granulaire et des cycles de lavage de ce lit, chaque cycle de traitement étant réalisé en alimentant par le haut le lit granulaire en eau à traiter et en soutirant par le bas l'eau traitée.

Selon l'invention, ce procédé se caractérise en ce que l'on utilise un lit granulaire constitué de matériaux supports granulaires de masse volumique inférieure à celle de l'eau à traiter et en ce que chaque cycle de lavage consiste :

.   à interrompre le sous-tirage de l'eau traitée et à arrêter l'alimentation en eau à traiter de façon que le lit granulaire flotte dans un volume d'eau VL donné,

.   à admettre de l'air de lavage dans le réacteur en vue d'assurer un brassage du lit flottant précité,

.   à interrompre l'admission d'air en vue de permettre une séparation des matériaux granulaires et des boues par différence de masse volumique, avec décantation desdites boues et flottation desdits matériaux,

.   à évacuer les boues à la base du réacteur ainsi que l'eau contenue dans celui-ci en vue de vidanger le lit granulaire pour un nouveau cycle de traitement.

Un tel procédé consiste donc à assurer, lors de chaque cycle de lavage, un brassage dont l'efficacité est liée notamment à la différence de masse volumique entre les matériaux supports et le mélange air/eau, qui conduit localement à des forces de cisaillement entraînant le décrochage des boues. De plus, le brassage est effectué dans un volume d'eau donné, ce qui permet de contrôler ledit brassage en jouant sur le débit d'air et sur la durée, et ceci sans consommation d'eau.

Par ailleurs, l'arrêt du brassage par interruption de l'admission d'air entraîne une séparation très rapide des matériaux granulaires et des boues par différence de masse volumique, avec décantation desdites boues et flottation desdits matériaux.

La phase liquide se trouve alors très fortement enrichie en boues et constitue la liqueur mixte à évacuer, cette évacuation étant réalisée par simple vidange du lit jusqu'à dénoyage de celui-ci.

Les conséquences immédiates de ces conditions de lavage sont une économie d'eau et d'air et donc globalement d'énergie, une surface du décanteur primaire, vers lequel la liqueur mixte est évacuée, plus faible que pour les procédés connus où le lit est au moins partiellement immergé, comptetenu de la faible quantité d'eau de lavage, et des durées de cycle facilement adaptables aux caractéristiques de l'eau à traiter.

Selon une autre caractéristique de l'invention, chaque cycle de traitement est réalisé de façon que le lit granulaire soit immergé dans une fraction inférieure de hauteur Hi, et émergé dans sa fraction supérieure, avec :

$$\frac{Hi}{H} \leqslant \frac{\rho_{mat}}{\rho_{eau}}$$

où :
- H est la hauteur totale du lit granulaire
- $\rho$ mat la masse volumique des matériaux supports
- $\rho$ eau la masse volumique de l'eau à traiter

Le lit granulaire comporte donc, en premier lieu, une partie émergée dans laquelle l'eau à traiter ruisselle, ce qui permet de favoriser la rétention des matières en suspension dans les interstices du lit granulaire par rapport à l'élimination des matières solubles, du fait du faible temps de résidence de l'eau à traiter dans cette partie émergée.

Le lit granulaire comporte, en outre, une partie immergée dans laquelle les temps de résidence de l'eau à traiter sont plus importants, ce qui permet de favoriser l'élimination des matières solubles, tout en évitant des relargages intempestifs de matières en suspension.

De ce fait, le niveau d'immersion du lit granulaire peut être ajusté en fonction de la teneur en matières en suspension de l'eau à traiter en faisant varier, en proportion, les hauteurs de la fraction émergée dans laquelle s'effectue préférentiellement la rétention des matières en suspension, et de la fraction immergée dans laquelle s'effectue préférentiellement l'élimination des matières dissoutes et l'adsorption des matières colloïdales.

Le niveau d'immersion peut être ajusté en jouant sur la masse volumique des matériaux supports composant le lit granulaire. Toutefois, selon un mode de mise en oeuvre préférentiel visant à permettre d'effectuer cet ajustement de façon simple, lors de chaque cycle de traitement, l'on alimente par le haut le lit granulaire et l'on soutire l'eau traitée, de façon que ledit lit granulaire repose sur le plancher.

Dans ces conditions, on peut en effet régler la hauteur de la fraction du lit granulaire immergée en jouant sur la hauteur de sortie de l'eau traitée par rapport au plancher, dans une plage de hauteurs telle que le poids du lit granulaire reste supérieur à la poussée d'Archimède correspondante.

Une telle capacité de réglage permet d'optimiser facilement les caractéristiques du lit granulaire en fonction de la teneur de l'eau à traiter et notamment des proportions de matières solubles. En outre, le niveau d'immersion déterminé par ce réglage de la hauteur de sortie de l'eau traitée peut également être ajusté en jouant sur la masse volumique des matériaux supports.

En outre, lorsque le cycle de traitement est réalisé de façon que le lit granulaire repose sur le plancher, tel que décrit ci-dessus, lors de chaque cycle de lavage, et de façon avantageuse :

. l'on interrompt le soutirage de l'eau traitée,
. l'on fait monter le niveau d'eau dans le réacteur de façon que le lit granulaire soit amené à flotter dans le volume d'eau VL,
. et l'on arrête l'alimentation d'eau à traiter.

Chaque cycle de lavage consiste donc à engendrer une augmentation de la poussée d'Archimède par rapport au poids du lit granulaire, de façon à réaliser un équilibre de ces forces et à entraîner une flottation dudit lit.

Il convient également de noter que, lors des cycles de traitement et du fait de l'écoulement rapide de l'eau à traiter dans la fraction émergée, les pertes de charge s'avèrent globalement mieux réparties sur la hauteur du lit granulaire. Ces pertes de charge sont donc plus faibles que pour un lit totalement immergé, ce qui permet d'augmenter la durée des cycles de traitement et conduit à une économie supplémentaire en eau de lavage.

Par ailleurs, selon un mode de mise en oeuvre préférentiel permettant de déterminer le volume d'eau VL fournissant le meilleur compromis brassage efficace/volumes d'air et d'eau de lavage minimaux, l'on interrompt le soustirage d'eau traitée et l'on arrête l'alimentation d'eau à traiter de façon que, lors du cycle de lavage, le lit granulaire flotte dans un volume d'eau VL, tel que :

$$HL = \frac{H \, (I - \varepsilon)}{(1 - \varepsilon')}$$

où :
- H la hauteur totale du lit granulaire au repos,
- $\varepsilon$ la porosité du lit granulaire au repos,
- HL est la hauteur d'eau dans le réacteur au-dessus du plancher équivalent au volume VL, lors du brassage,
- $\varepsilon'$ la porosité du lit granulaire lorsque celui-ci est brassé.

En outre, le volume VL est préférentiellement adapté pour que $\frac{\varepsilon'}{\varepsilon} \geq 1,2$.

Par ailleurs, lors d'un traitement aérobie, l'on admet préférentiellement, lors de chaque cycle de traitement, de l'air de traitement dans le réacteur, à contre courant de l'écoulement d'eau à traiter.

Selon deux modes de mise en oeuvre préférentiels, cet air de traitement peut être, en outre, délivré :
- soit à la base du réacteur,
- soit au-dessus du plancher, à une hauteur intermédiaire au-dessus dudit plancher inférieure à la hauteur d'immersion du lit granulaire.

Selon une autre caractéristique de l'invention, l'on utilise un lit granulaire constitué de matériaux supports granulaires de masse volumique $\rho$ mat telle que

$$0,7 \leq \frac{\rho_{mat}}{\rho_{eau}} < 1$$

où $\rho$ eau représente la masse volumique de l'eau à traiter.

Ce lit granulaire peut, en outre, être composé d'au moins deux couches superposées constituées de matériaux supports granulaires différents, chacun desdits matériaux présentant une masse volumique inférieure à celle de l'eau à traiter. Les matériaux des différentes couches présentent, en outre, du bas vers le haut, une grosseur et une légèreté croissantes de façon à favoriser le reclassement après lavage.

EP 0 492 690 B1

Selon une autre caractéristique de l'invention, l'on utilise un réacteur dans lequel le plancher est un plancher perforé apte à soutenir les matériaux granulaires et à permettre le passage des boues, ledit plancher étant disposé à une hauteur intermédiaire dans ledit réacteur.

L'invention s'étend à un réacteur de traitement d'eau pour la mise en oeuvre du procédé ci-dessus décrit, caractérisé en ce qu'il comprend en combinaison :
- une enceinte dotée en partie supérieure de moyens d'alimentation en eau à traiter, et comportant un plancher dans sa partie inférieure,
- un lit poreux constitué de matériaux supports granulaires présentant une masse volumique inférieure à celle de l'eau à traiter, ledit lit remplissant partiellement l'enceinte sur une hauteur H,
- des moyens de soutirage de l'eau traitée débouchant à la base de l'enceinte,
- des moyens de fermeture des moyens de soutirage,
- des moyens d'alimentation en air de lavage destiné à assurer un brassage du lit granulaire,
- et des moyens d'évacuation de la liqueur mixte constituée de boues en suspension dans l'eau.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :
- la figure 1 est une coupe schématique par un plan vertical d'un réacteur de traitement d'eau conforme à l'invention,
- les figures 2a à 2f sont des schémas illustrant les différentes étapes de lavage de ce réacteur.

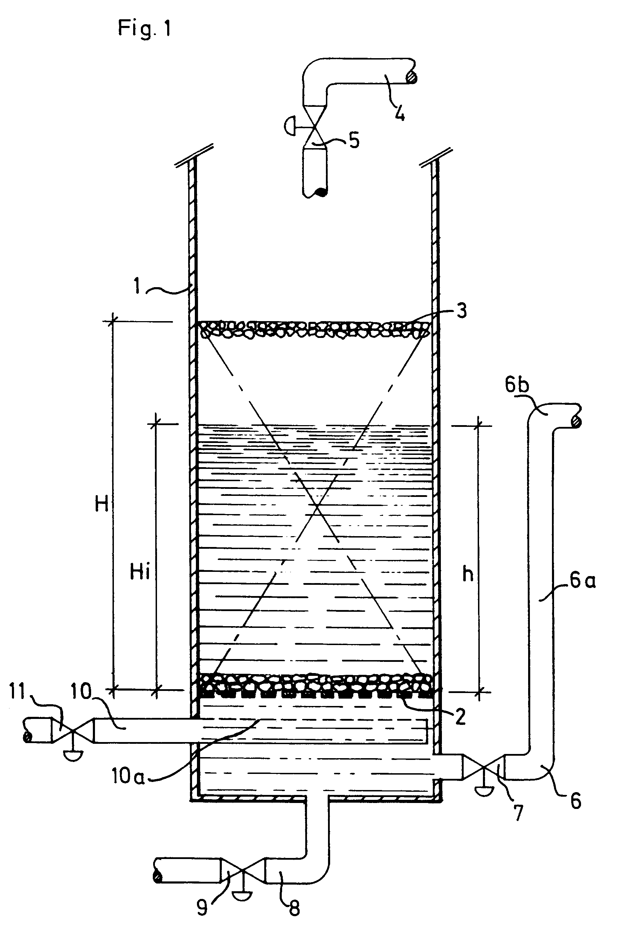

Le réacteur représenté à la figure 1 est destiné à une épuration biologique de l'eau.

Il comprend, en premier lieu, une enceinte 1 ouverte en partie supérieure, comportant un plancher intermédiaire perforé 2. Cette enceinte 1 est remplie partiellement sur une hauteur H d'un lit granulaire 3 reposant sur le plancher perforé 2, et constitué de matériaux supports granulaires de masse volumique inférieure à celle de l'eau à traiter.

Ces matériaux supports, de tout type connu en soi, possèdent préférentiellement une masse volumique $\rho$ mat telle que

$$0,7 \leqslant \frac{\rho_{mat}}{\rho_{eau}} < 1,$$

$\rho$ eau étant la masse volumique de l'eau à traiter, et un diamètre de l'ordre de quelques millimètres, par exemple compris entre deux et six millimètres.

Ce réacteur comprend, en outre, des moyens d'alimentation 4 en eau à traiter débouchant en partie supérieure de l'enceinte 1, et pourvus de moyens de fermeture 5 tels qu'une électrovanne. D'une façon connue en soi, les moyens d'alimentation sont, en outre, conçus pour obtenir une répartition homogène de l'eau à traiter au-dessus du lit granulaire 3.

Il comprend également un conduit 6 de soutirage de l'eau traitée pourvu de moyens de fermeture 7 tels qu'une électrovanne. Ce conduit de soutirage 6 débouche à la base de l'enceinte 1 sous le plancher perforé 2, se prolonge par un conduit ascendant 6a doté d'un coude supérieur 6b de surverse. Ce coude 6b est situé à une hauteur intermédiaire h au-dessus du plancher 2, telle que h < H, lorsque le lit granulaire 3 repose sur ce plancher.

Cette hauteur h est adaptée, lors d'un cycle de traitement, d'une part, pour que le lit granulaire 3 repose sur le plancher 2, c'est-à-dire pour que le poids de ce lit soit supérieur à la poussée d'Archimède correspondante, et, d'autre part, pour que ce lit granulaire possède une fraction immergée de hauteur Hi égale à h, et une fraction émergée.

Le réacteur comporte, par ailleurs, un conduit d'évacuation 8 débouchant au niveau de la paroi de fond de l'enceinte 1, et pourvu de moyens de fermeture 9 tels qu'une électrovanne.

Il comprend enfin des moyens d'alimentation en air de traitement et de lavage constitués de rampes 10 s'étendant sous le plancher 2 et dotées de sorties d'air 10a agencées pour délivrer cet air à contre-courant de l'écoulement d'eau à traiter. Ces moyens d'alimentation en air sont, en outre, dotés de moyens de fermeture 11, tels que des électrovannes.

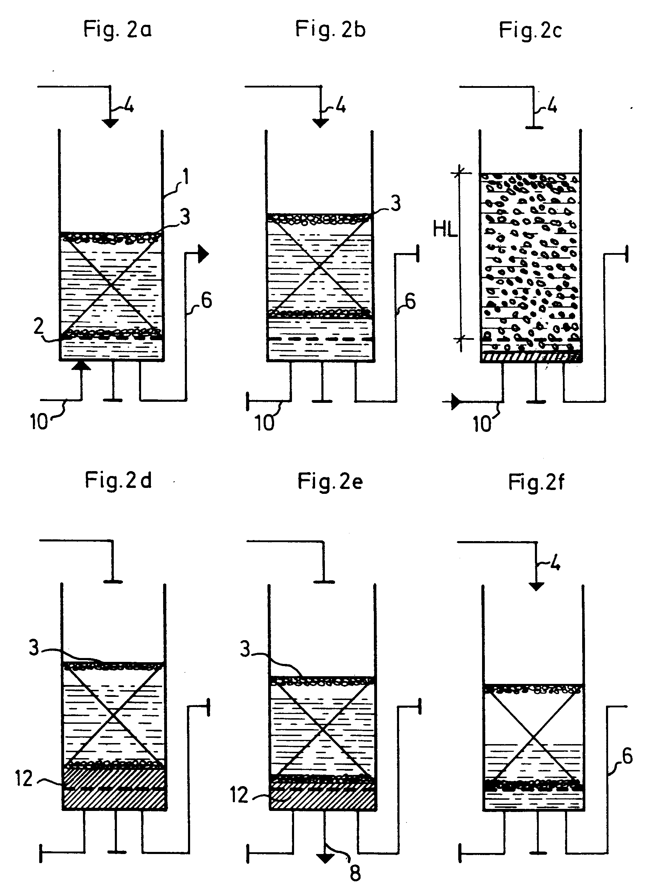

Tel que représenté à la figure 2a, lors d'un cycle de traitement, le lit granulaire 3 repose sur le plancher 2 et l'eau à traiter traverse de haut en bas ce lit granulaire. En outre, de l'air de traitement est insufflé à la base de l'enceinte 1.

Le début de chaque cycle de lavage peut être commandé, soit à partir d'une mesure de turbidité, soit au moyen d'un détecteur de niveau disposé dans l'enceinte de façon à être activé lors d'une augmentation donnée du niveau d'eau résultant du colmatage croissant du lit.

5

Ce cycle de lavage consiste, en premier lieu à interrompre le sous-tirage d'eau traitée et l'admission d'air de traitement. De ce fait, l'alimentation en eau à traiter n'étant pas interrompue, le niveau d'eau à l'intérieur de l'enceinte 1 monte, et le poids du lit 3 devient inférieur à la poussée d'Archimède. Le lit granulaire est par conséquent amené à flotter (figure 2b).

Dans un second temps, l'alimentation en eau à traiter est interrompue lorsque le volume d'eau VL dans lequel flotte le lit granulaire 3 atteint une valeur telle que :

$$HL = \frac{H \ (1 - \varepsilon)}{(1 - \varepsilon')},$$

avec $\frac{\varepsilon'}{\varepsilon} \geq 1,2$

où :

. $\varepsilon$ est la porosité du lit granulaire au repos,
. HL la hauteur d'eau dans le réacteur au-dessus du plancher, équivalent au volume VL, lors du brassage,
. $\varepsilon'$ la porosité du lit granulaire lorsque celui-ci est brassé.

De l'air de lavage est alors admis dans l'enceinte de façon à assurer un brassage efficace du lit granulaire 3 qui entraîne le décrochage des boues (figure 2c). Lors de ce brassage, il apparaît une stratification partielle entre les boues qui occupent la partie basse et les matériaux granulaires qui restent préférentiellement en partie haute.

L'arrêt du brassage par interruption de l'admission d'air entraîne ensuite une séparation très rapide des matériaux granulaires 3 et des boues 12 par différence de masse volumique, avec décantation desdites boues et flottation desdits matériaux (figure 2d).

La phase liquide fortement enrichie en boues, est alors évacuée par simple vidange grâce à l'ouverture du conduit d'évacuation 8 (figure 2e). Une fois le lit granulaire 3 vidangé et, par conséquent, le cycle de lavage terminé, les conduits d'alimentation en eau à traiter 4 et de soutirage 6 sont réouverts pour un nouveau cycle de traitement, et le niveau d'eau dans l'enceinte remonte jusqu'au niveau h (figure 2f). L'air de traitement est de nouveau insufflé à la base de l'enceinte.

A titre d'illustration, un exemple de fonctionnement de ce procédé utilisé pour le traitement d'une eau résiduaire urbaine, est décrit ci-dessous.

Les caractéristiques de l'eau brute à traiter étaient les suivantes :

| | |
|---|---|
| . DCO totale | 600-650 mg $O_2$/l |
| . DCO soluble | 200-300 mg $O_2$/l |
| . $DBO_5$ totale | 200-250 mg $O_2$/l |
| . $DBO_5$ soluble | 80-120 mg $O_2$/l |
| . COT total | 100-150 mg C/l |
| . COT soluble | 70- 90 mg C/l |
| . MES | 200-300 mg MS/l |
| . pH | 7,3 |

Ce traitement a été effectué dans un réacteur présentant les caractéristiques suivantes :
- hauteur du lit granulaire 3 au repos sur le plancher 2 : H = 1,4 m
- hauteur du lit immergé : Hi = 0,8 m
- matériaux : polyéthylène de récupération diamètre 4-6 mm - densité/eau 0,94
- porosité initiale du lit $\varepsilon$ = 0,52.

Le cycle de traitement a été réalisé dans les conditions opératoires suivantes :
- vitesse de filtration définie par rapport au fût vide 0,6 m/h,
- temps de passage défini par rapport au volume de liquide 30 mn,
- vitesse en air de traitement définie par rapport au fût vide : 10 m/h,
- charge volumique appliquée définie par rapport au volume du lit granulaire :

14,5 kg $DCO_t/m^3$.j
ou 5,5 kg $DBO_t/m^3$.j
ou 2,5 kg $COT_t/m^3$.j

La durée de ce cycle de traitement a été de cent heures, et la perte de charge relevée en fin de cycle de 50 cm de colonne d'eau.

Le cycle de lavage a été réalisé quant à lui dans les conditions opératoires suivantes :
- hauteur du lit granulaire 3/au plancher 2 et avant introduction de l'air de lavage : 1,8 m
- hauteur d'eau/plancher 2 après introduction d'air de lavage HL = 2 m
- porosité $\epsilon'$ du lit granulaire 3 en cours de lavage défini selon la relation :

$$HL = \frac{H(1 - \varepsilon)}{(1 - \varepsilon')}$$

$\epsilon' = 0,66$
- vitesse en air de lavage définie par rapport au fût vide = 60 m/h (durée 1 mn).

Un tel procédé a permis d'obtenir un effluent traité présentant les caractéristiques suivantes :
. Caractéristiques de l'eau traitée

| - DCO totale | 90 mg $O_2$/l | rendement 86 % |
| - DCO soluble | 70 mg $O_2$/l | rendement 72 % |
| - COT totale | 35 mg C/l | rendement 72 % |
| - COT soluble | 30 mg C/l | rendement 63 % |
| - MES | 20 à 30 mg MS/l | rendement 90 % |

. Capacités épuratoires : charge volumique éliminée, définie par rapport au volume du lit granulaire :
10-12 kg $DCO_t/m^3$.jour.

**Revendications**

1. Procédé de traitement d'eau du type utilisant un lit granulaire (3) disposé dans un réacteur au-dessus d'un plancher (2), ce lit granulaire (3) étant adapté pour assurer une filtration ou une filtration associée à une épuration biologique de l'eau, ledit procédé consistant à alterner des cycles de traitement d'eau au moyen dudit lit granulaire (3) et des cycles de lavage de ce lit, chaque cycle de traitement étant réalisé en alimentant par le haut le lit granulaire (3) en eau à traiter et en soutirant par le bas l'eau traitée, le dit procédé étant caractérisé en ce que l'on utilise un lit granulaire (3) constitué de matériaux supports granulaires de masse volumique inférieure à celle de l'eau à traiter et en ce que chaque cycle de lavage consiste :
   . à interrompre le sous-tirage de l'eau traitée et à arrêter l'alimentation en eau à traiter de façon que le lit granulaire (3) flotte dans un volume d'eau VL donné,
   . à admettre de l'air de lavage dans le réacteur en vue d'assurer un brassage du lit flottant précité,
   . à interrompre l'admission d'air en vue de permettre une séparation des matériaux granulaires et des boues (12) par différence de masse volumique, avec décantation desdites boues et flottation desdits matériaux,
   . à évacuer les boues à la base du réacteur ainsi que l'eau contenue dans celui-ci en vue de vidanger le lit granulaire (3) pour un nouveau cycle de traitement.

2. Procédé de traitement d'eau selon la revendication 1 caractérisé en ce que :
   - lors de chaque cycle de traitement, l'on alimente par le haut le lit granulaire (3) et l'on soutire l'eau traitée, de façon que ledit lit granulaire repose sur le plancher (2),
   - lors de chaque cycle de lavage :
     . l'on interrompt le soutirage de l'eau traitée,
     . l'on fait monter le niveau d'eau dans le réacteur de façon que le lit granulaire soit amené à flotter dans le volume d'eau VL,
     . et l'on arrête l'alimentation d'eau à traiter.

3. Procédé de traitement d'eau selon l'une des revendications 1 ou 2 caractérisé en ce que chaque cycle de traitement est réalisé de façon que le lit granulaire (3) soit immergé dans une fraction inférieure de

EP 0 492 690 B1

hauteur Hi, et émergé dans sa fraction supérieure, avec :

$$\frac{Hi}{H} \leqslant \frac{\rho_{mat}}{\rho_{eau}}$$

où :
- H est la hauteur totale du lit granulaire
- $\rho$ mat la masse volumique des matériaux supports
- $\rho$ eau la masse volumique de l'eau à traiter

4. Procédé de traitement d'eau selon l'une des revendications précédentes caractérisé en ce que l'on interrompt le sous-tirage d'eau traitée et l'on arrête l'alimentation d'eau à traiter de façon que, lors du cycle de lavage, le lit granulaire (3) flotte dans un volume d'eau VL, tel que :

$$HL = \frac{H(I - \varepsilon)}{(1 - \varepsilon')}$$

où :
- H la hauteur totale du lit granulaire au repos,
- $\epsilon$ la porosité du lit granulaire au repos,
- HL est la hauteur d'eau dans le réacteur au-dessus du plancher, équivalent au volume VL, lors du brassage,
- $\epsilon'$ la porosité du lit granulaire lorsque celui-ci est brassé.

5. Procédé selon la revendication 4, caractérisé en ce que l'on amène le lit à flotter dans un volume VL, tel que $\frac{\varepsilon'}{\varepsilon} \geq 1,2$

6. Procédé de traitement d'eau selon l'une des revendications précédentes caractérisé en ce que l'on utilise un lit granulaire (3) constitué de matériaux supports granulaires de masse volumique $\rho$ mat telle que

$$0,7 \leqslant \frac{\rho_{mat}}{\rho_{eau}} < 1$$

où $\rho$ eau représente la masse volumique de l'eau à traiter.

7. Procédé de traitement d'eau selon l'une des revendications précédentes caractérisé en ce que, lors de chaque cycle de traitement, l'on admet de l'air de traitement dans le réacteur, à contre-courant de l'écoulement d'eau à traiter.

8. Procédé de traitement d'eau selon la revendication 7, caractérisé en ce que l'on délivre l'air de traitement à la base du réacteur.

9. Procédé de traitement d'eau selon la revendication 7, caractérisé en ce que l'on délivre l'air de traitement au-dessus du plancher (2) à une hauteur intermédiaire au-dessus dudit plancher inférieure à la hauteur d'immersion du lit granulaire (3).

10. Procédé selon l'une des revendications précédentes, caractérisé en ce que l'on utilise un réacteur dans lequel le plancher (2) est un plancher perforé apte à soutenir les matériaux granulaires et à permettre le passage des boues, ledit plancher étant disposé à une hauteur intermédiaire dans ledit réacteur.

11. Procédé de traitement d'eau selon l'une des revendications précédentes caractérisé en ce que l'on utilise un lit granulaire (3) composé d'au moins deux couches superposées constituées de matériaux supports granulaires différents, chacun desdits matériaux présentant une masse volumique inférieure à celle de l'eau à traiter.

12. Réacteur de traitement d'eau pour la mise en oeuvre d'un procédé conforme à l'une des revendications 1 à 11, comprenant :
- une enceinte (1) dotée en partie supérieure de moyens (4) d'alimentation en eau à traiter, et comportant un plancher (2) dans sa partie inférieure,
- un lit poreux (3) constitué de matériaux supports granulaires présentant une masse volumique inférieure à celle de l'eau à traiter, ledit lit remplissant partiellement l'enceinte (1) sur une hauteur H,
- des moyens (6) de soutirage de l'eau traitée débouchant à la base de l'enceinte (1),
- des moyens de fermeture (7) des moyens de soutirage (6),
- des moyens (10) d'alimentation en air de lavage destiné à assurer un brassage du lit granulaire (3),
- et des moyens d'évacuation (8) de la liqueur mixte constituée de boues (12) en suspension dans l'eau,
ledit réacteur étant caractérisé en ce que le lit granulaire (3) est constitué de matériaux supports granulaires présentant une masse volumique $\rho$ mat telle :

$$0,7 \leqslant \frac{\rho_{\underline{mat}}}{\rho_{eau}} < 1,$$

où $\rho$ eau est la masse volumique de l'eau à traiter.

13. Réacteur de traitement d'eau selon la revendication 12, caractérisé en ce que les moyens de soutirage (6) comprennent un conduit ascendant (6a) doté d'une sortie d'évacuation située à une hauteur intermédiaire h au-dessus du plancher (2), avec h < H lorque le lit (3) repose sur ledit plancher.

14. Réacteur de traitement d'eau selon l'une des revendications 12 ou 13, caractérisé en ce qu'il comprend des moyens (10) d'alimentation en air de traitement aptes à délivrer cet air à contre-courant de l'écoulement d'eau à traiter.

15. Réacteur de traitement d'eau selon la revendication 14, caractérisé en ce que les moyens d'alimentation en air de traitement (10) débouchent à la base de l'enceinte (1).

16. Réacteur de traitement d'eau selon la revendication 14, caractérisé en ce que les moyens d'alimentation en air de traitement débouchent au-dessus du plancher, à une hauteur intermédiaire au-dessus dudit plancher inférieure à la hauteur d'immersion du lit granulaire lorsque ledit lit repose sur ce plancher.

17. Réacteur selon l'une des revendications 12 à 16, dans lequel le plancher (2) est un plancher perforé apte à soutenir les matériaux granulaires et à permettre le passage des boues, ledit plancher étant disposé à une hauteur intermédiaire dans ledit réacteur.

18. Réacteur de traitement d'eau selon l'une des revendications 12 à 17, caractérisé en ce que les moyens (8) d'évacuation de la liqueur mixte débouchent à la base de l'enceinte (1).

19. Réacteur de traitement d'eau selon l'une des revendications 12 à 18, caractérisé en ce que le lit granulaire (3) est composé d'au moins deux couches superposées constituées de matériaux supports granulaires différents, chacun desdits matériaux présentant :
. une masse volumique $\rho$ mat telle que

$$0,7 \leqslant \frac{\rho_{\underline{mat}}}{\rho_{eau}} < 1,$$

avec $\rho$ eau représentant la masse volumique de l'eau à traiter,

. des diamètres aptes à permettre leur reclassement.

## Claims

1. Water-treatment process of the type using a granular bed (3) arranged within a apparatus above a deck (2), said granular bed (3) being so designed as to ensure filtration or filtration combined with biological water purification, whereby said process consists in alternating cycles of water treatment by means of said granular bed (3) with cycles in which said bed is washed, each treatment cycle being implemented by supplying the granular bed (3) from above with water to be treated and extracting the treated water at the base, said process being characterised in that use is made of a granular bed (3) consisting of granular supporting materials, the density of which is lower than that of the water to be treated and in that each washing cycle consists:

   . in interrupting the extraction of treated water and in discontinuing the supply of water to be treated so that the granular bed (3) floats in a given volume of water VL,
   . in allowing washing air to enter the apparatus so as to ensure mixing of the aforementioned floating bed,
   . in interrupting the influx of air in order to enable separation by density difference of the granular materials from the sediments (12), whereby said sediments settle and said materials float,
   . in evacuating the sediments at the base of the apparatus as well as the water contained in the latter with a view to draining the granular bed (3) for a new treatment cycle.

2. Water-treatment process according to Claim 1, characterised in that:

   - in the course of each treatment cycle the granular bed (3) is supplied from above and the treated water is extracted so that said granular bed rests on the deck (2),
   - in the course of each washing cycle:
     . the extraction of treated water is interrupted,
     . the water level within the apparatus is made to rise so that the granular bed is caused to float in the volume of water VL,
     . and the supply of water to be treated is discontinued.

3. Water-treatment process according to one of Claims 1 or 2, characterised in that each treatment cycle is implemented in such a way as to cause the granular bed (3) to be immersed within a lower section of height Hi and to emerge in its upper section, with

$$\frac{Hi}{H} \leq \frac{e \ mat}{e \ water}$$

where:
   - H is the total height of the granular bed
   - $\rho$ mat is the density of the supporting materials
   - $\rho$ water is the density of the water to be treated.

4. Water-treatment process according to one of the preceding claims, characterised in that the extraction of treated water is interrupted and the supply of water to be treated is discontinued with a view to causing, in the course of the washing cycle, the granular bed (3) to float in a volume of water VL so that

$$HL = \frac{H \ (I - \epsilon)}{(1 - \epsilon')}$$

where:
   - H is the total height of the granular bed at rest,
   - $\epsilon$ is the porosity of the granular bed at rest,
   - HL is the height of the water within the apparatus above the deck, whereby said height corresponds to the volume VL in the course of mixing,

- $\epsilon'$ is the porosity of the granular bed during mixing of the latter.

5. Process according to Claim 4 characterised in that the bed is caused to float in a volume VL so that $\epsilon'/\epsilon \geq 1.2$

6. Water-treatment process according to one of the preceding claims, characterised in that use is made of a granular bed (3) consisting of granular supporting materials with a density $\rho$ mat such that

$$0.7 \leq \rho\ mat/\rho\ water < 1$$

where $\rho$ water represents the density of the water to be treated.

7. Water-treatment process according to one of the preceding Claims, characterised in that in the course of each treatment cycle treatment air is allowed to enter the apparatus in the direction opposite to that of the flow of water to be treated.

8. Water-treatment process according to Claim 7, characterised in that treatment air is supplied at the base of the apparatus.

9. Water-treatment process according to Claim 7, characterised in that treatment air is supplied above the deck (2) at an intermediate height above said deck which is lower than the immersion height of the granular bed (3).

10. Process according to one of the preceding claims, characterised in that use is made of an apparatus in which the deck (2) is a perforated deck so designed as to support the granular materials while permitting sediments to pass, said deck being arranged at an intermediate height within said apparatus.

11. Water-treatment process according to one of the preceding claims, characterised in that use is made of a granular bed (3) composed of at least two superimposed layers constituted by different granular supporting materials, each of said materials having a density lower than that of the water to be treated.

12. Water-treatment apparatus for implementing a process according to one of Claims 1 to 11, comprising:
    - a vessel (1) provided in its upper section with means (4) for supplying water to be treated and comprising in its lower section a deck (2),
    - a porous bed (3) consisting of granular supporting materials having a density lower than that of the water to be treated, whereby said bed partially fills the vessel (1) to a height H,
    - means (6) for extracting the treated water, opening out at the base of the vessel (1),
    - means (7) for closing the extraction means (6),
    - means (10) for supplying washing air, said air having the function of ensuring mixing of the granular bed (3),
    - and means (8) for evacuating the mixed liquor constituted by sediments (12) suspended in the water,
    said apparatus being characterised in that the granular bed (3) consists of granular supporting materials having a density $\rho$ mat such that:

$$0.7 \leq \frac{e\ \underline{mat}}{e\ water} < 1$$

where $\rho$ water is the density of the water to be treated.

13. Apparatus for the treatment of water according to Claim 12, characterised in that the extraction means (6) comprise a rising conduit (6a) provided with an evacuation outlet situated at an intermediate height h above the deck (2), with h < H when the bed (3) rests on said deck.

14. Apparatus for the treatment of water according to one of Claims 12 or 13, characterised in that it comprises means (10) for supplying treatment air, said means (10) being so designed as to supply said air in the direction opposite to that in which the water to be treated flows.

15. Apparatus for the treatment of water according to Claim 14, characterised in that the means (10) for supplying treatment air open out at the base of the enclosure (1).

16. Apparatus for the treatment of water according to Claim 14, characterised in that the means for supplying treatment air open out above the deck, at an intermediate height above said deck which is lower than the immersion height of the granular bed when said bed rests on said deck.

17. Apparatus according to one of Claims 12 to 16, in which the deck (2) is a perforated deck so designed as to support the granular materials while permitting the sediments to pass, said deck being arranged at an intermediate height within said apparatus.

18. Apparatus for the treatment of water according to one of Claims 12 to 17, characterised in that the means (8) for evacuating the mixed liquor open out at the base of the vessel (1).

19. Apparatus for the treatment of water according to one of Claims 12 to 18, characterised in that the granular bed (3) is composed of at least two superimposed layers consisting of different granular supporting materials, each of said materials having:
   . a density $\rho$ mat such that

$$0.7 \leq \frac{\rho\ mat}{\rho\ water} < 1,$$

   where $\rho$ water represents the density of the water to be treated,
   . diameters such as to enable their rearrangement.

**Patentansprüche**

1. Wasserbehandlungsverfahren der Art mit einer oberhalb eines Bodens (2) in einer Vorrichtung angeordneten körnigen Schicht (3), wobei die besagte körnige Schicht (3) so beschaffen ist, daß sie Filtration bzw. Filtration in Verbindung mit biologischer Reinigung von Wasser gewährleistet, und zwar besteht das besagte Verfahren darin, daß die Zyklen der Wasserbehandlung mit Hilfe der besagten körnigen Schicht (3) mit Zyklen des Waschens dieser Schicht abwechseln, wobei jeder Behandlungszyklus darin besteht, daß zu behandelndes Wasser der körnigen Schicht (3) von oben zugeführt und das behandelte Wasser von unten entzogen wird, und zwar ist das besagte Verfahren dadurch gekennzeichnet, daß von einer körnigen Schicht (3) aus körnigen Trägermaterialien Gebrauch gemacht wird, deren Dichte geringer ist als die des zu behandelnden Wassers, sowie dadurch, daß jeder Waschzyklus darin besteht:
   . den Entzug des behandelten Wasser zu unterbrechen und die Zufuhr von zu behandelndem Wasser auszuschalten, so daß die körnige Schicht (3) in einem vorgegebenen Wasservolumen VL schwimmt,
   . Waschluft in die Vorrichtung einzulassen, um Rühren der besagten schwimmenden Schicht zu gewährleisten,
   . die Zufuhr von Luft zu unterbrechen, um Trennung der körnigen Materialien von Sedimenten (12) infolge des Dichteunterschieds zu gestatten, wobei sich die besagten Sedimente absetzen und die besagten Materialien schwimmen,
   . die Sedimente am Boden der Vorrichtung ebenso wie das in der besagten Vorrichtung enthaltene Wasser zu entnehmen, um die körnige Schicht (3) zwecks Durchführung eines neuen Behandlungszyklus zu entleeren.

2. Wasserbehandlungsverfahren nach Anspruch 1, dadurch gekennzeichnet, daß:
   - während jedes Behandlungszyklus die körnige Schicht (3) von oben her versorgt und das behandelte Wasser entzogen wird, so daß die besagte körnige Schicht auf dem Boden (2) ruht,
   - während jedes Waschzyklus:
     . der Entzug des behandelten Wassers unterbrochen wird,

.  der Wasserstand in der Vorrichtung erhöht wird, um die körnige Schicht zum Schwimmen in dem Wasservolumen VL zu veranlassen,

.  und die Zufuhr von zu behandelndem Wasser ausgeschaltet wird.

3.  Wasserbehandlungsverfahren nach einem der Ansprüche 1 oder 2, dadurch gekennzeichnet, daß jeder Behandlungszyklus so durchgeführt wird, daß die körnige Schicht (3) in einem unteren Abschnitt der Höhe Hi untergetaucht ist und in deren höherem Abschnitt auftaucht, mit:

$$\frac{Hi}{H} \leq \frac{e \; Mat}{e \; Wasser}$$

wobei:
- H die Gesamthöhe der körnigen Schicht ist
- $\rho$ Mat die Dichte der Trägermaterialien ist
- $\rho$ Wasser die Dichte des zu behandelnden Wassers ist.

4.  Wasserbehandlungsverfahren nach einem der vorstehenden Ansprüche, dadurch gekennzeichnet, daß der Entzug von behandeltem Wasser unterbrochen und die Zufuhr von zu behandelndem Wasser ausgeschaltet wird, so daß die körnige Schicht (3) während des Waschzyklus in einem Wasservolumen VL schwimmt, und zwar so daß:

$$HL = \frac{H \; (I - \epsilon)}{(1 - \epsilon')}$$

wobei:
- H die Gesamthöhe der körnigen Schicht im Ruhezustand ist,
- $\epsilon$ die Porosität der körnigen Schicht im Ruhezustand ist,
- HL die Höhe des Wassers in der Vorrichtung oberhalb des Bodens ist und dem Volumen VL während des Rührens entspricht,
- $\epsilon'$ die Porosität der körnigen Schicht ist, während diese gerührt wird.

5.  Verfahren nach Anspruch 4, dadurch gekennzeichnet, daß die Schicht zum Schwimmen in einem Volumen VL veranlaßt wird, und zwar so daß $\epsilon'/\epsilon \geq 1.2$

6.  Wasserbehandlungsverfahren nach einem der vorstehenden Ansprüche, dadurch gekennzeichnet, daß von einer körnigen Schicht (3) Gebrauch gemacht wird, wobei diese aus körnigen Trägermaterialien mit einer Dichte $\rho$ Mat besteht, die so beschaffen ist, daß $0,7 \leq \rho$ Mat$/\rho$ Wasser $< 1$ wobei $\rho$ Wasser die Dichte des zu behandelnden Wassers bezeichnet.

7.  Wasserbehandlungsverfahren nach einem der vorstehenden Ansprüche, dadurch gekennzeichnet, daß während jedes Behandlungszyklus Behandlungsluft in die Vorrichtung eingelassen wird, und zwar im Gegenstrom zu dem Fluß des behandelnden Wassers.

8.  Wasserbehandlungsverfahren nach Anspruch 7, dadurch gekennzeichnet, daß die Behandlungsluft am Fuß des Apparats zugeführt wird.

9.  Wasserbehandlungsverfahren nach Anspruch 7, dadurch gekennzeichnet, daß Behandlungsluft oberhalb des Bodens (2) zugeführt wird, und zwar in einer Zwischenhöhe oberhalb des besagten Bodens, die geringer ist als die Tauchhöhe der körnigen Schicht (3).

10.  Verfahren nach einem der vorstehenden Ansprüche, dadurch gekennzeichnet, daß von einer Vorrichtung Gebrauch gemacht wird, in der der Boden (2) ein gelochter Boden ist, der so beschaffen ist, daß er die körnigen Materialien abstützt und den Durchlauf der Sedimente gestattet, wobei der besagte Boden in der besagten Vorrichtung in einer Zwischenhöhe angeordnet ist.

11. Wasserbehandlungsverfahren nach einem der vorstehenden Ansprüche, dadurch gekennzeichnet, daß von einer körnigen Schicht (3) Gebrauch wird, die sich aus mindestens zwei übereinander befindlichen Lagen zusammensetzt, wobei die besagten Lagen aus unterschiedlichen körnigen Trägermaterialien bestehen, und zwar hat jedes der besagten Materialien eine Dichte, die geringer ist als die des zu behandelnden Wassers.

12. Vorrichtung zur Behandlung von Wasser zwecks Durchführung eines Verfahrens nach einem der Ansprüche 1 bis 11, umfassend:
   - ein Gefäß (1), das in dessen oberen Teil mit Mitteln (4) zur Zufuhr von zu behandelndem Wasser ausgestattet ist, und in seinem unteren Teil einen Boden (2) umfaßt,
   - eine poröse, aus körnigen Trägermaterialien bestehende Schicht (3), deren Dichte geringer ist als die des zu behandelnden Wassers, wobei die besagte Schicht das Gefäß (1) in einer Höhe H teilweise füllt,
   - Mittel (6) zum Entziehen des behandelten Wassers, wobei die besagten Mittel am Fuße des Gefäßes (1) münden,
   - Mittel (7) zum Schließen der Entzugsmittel (6),
   - Mittel (10) zur Zufuhr von Waschluft, deren Funktion darin besteht, zu gewährleisten, daß die körnige Schicht (3) gerührt wird,
   - und Mittel (8) zum Entleeren der gemischten Flüssigkeit, die sich aus in dem Wasser in Schwebe befindlichen Sedimenten (12) zuzammensetzt,

wobei die besagte Vorrichtung dadurch gekennzeichnet ist, daß die körnige Schicht (3) aus körnigen Trägermaterialien mit einer Dichte $\rho$ Mat besteht, so daß

$$0,7 \leq \frac{e \: \underline{Mat}}{e \: Wasser} < 1,$$

wobei $\rho$ Wasser die Dichte des zu behandelnden Wassers bezeichnet.

13. Vorrichtung zur Behandlung von Wasser nach Anspruch 12, dadurch gekennzeichnet, daß die Entzugsmittel (6) eine Steigleitung (6a) umfassen, die mit einem in einer Zwischenhöhe h oberhalb des Bodens (2) gelegenen Entleerungsauslaß versehen ist, wobei h < H, wenn die Schicht (3) auf dem besagten Boden ruht.

14. Vorrichtung zur Behandlung von Wasser nach einem der Ansprüche 12 oder 13, dadurch gekennzeichnet, daß sie Mittel (10) für die Zufuhr von Behandlungsluft umfaßt, die so beschaffen sind, daß sie diese Luft im Gegenstrom zu dem zu behandelnden Wasser liefern.

15. Vorrichtung zur Behandlung von Wasser nach Anspruch 14, dadurch gekennzeichnet, daß die Mittel (10) zur Zufuhr von Luft am Fuß des Gefäßes (1) münden.

16. Vorrichtung zur Behandlung von Wasser nach Anspruch 14, dadurch gekennzeichnet, daß die Mittel zur Zufuhr von Behandlungsluft oberhalb des Bodens münden, und zwar in einer Zwischenhöhe oberhalb des besagten Bodens, die geringer ist als die Tauchhöhe der körnigen Schicht, wenn die besagte Schicht auf dem besagten Boden ruht.

17. Vorrichtung nach einem der Ansprüche 12 bis 16, bei der der Boden (2) ein gelochter Boden ist, der so beschaffen ist, daß er die körnigen Materialien abstützt und Durchgang der Sedimente gestattet, wobei der besagte Boden in einer Zwischenhöhe der besagten Vorrichtung angeordnet ist.

18. Vorrichtung zur Behandlung von Wasser nach einem der Ansprüche 12 bis 17, dadurch gekennzeichnet, daß die Mittel (8) zum Entleeren der gemischten Flüssigkeit am Fuß des Gefäßes (1) münden.

19. Vorrichtung zur Behandlung von Wasser nach einem der Ansprüche 12 bis 18, dadurch gekennzeichnet, daß sich die körnige Schicht (3) aus mindestens zwei übereinander befindlichen Lagen zusammensetzt, die aus unterschiedlichen körnigen Trägermaterialien bestehen, wobei jedes der besagten Materialien:

14

eine Dichte $\rho$ Mat aufweist, die der Beziehung $0{,}7 \leq \rho$ <u>Mat</u> $/ \rho$ Wasser $< 1$ entspricht, wobei $\rho$ Wasser die Dichte des zu behandelnden Wassers bezeichnet,

Durchmesser aufweist, die so beschaffen sind, daß sie die Umordnung der besagten Materialien gestatten.

Fig. 1

Fig. 2a

Fig. 2b

Fig. 2c

Fig. 2d

Fig. 2e

Fig. 2f